# DEMANDE DE BREVET EUROPEEN

(11) **EP 2 082 799 A1**
(43) Date de publication de la demande: **29.07.2009**
(21) Numéro de dépôt: 08000083.9
(22) Date de dépôt: 04.01.2008
(51) Int. Cl.: B01J 20/34, B01D 53/04

(54) **Procédé et dispositif de régénération d'un gel absorbeur d'anhydride carbonique contenu dans un gaz**

(71) Demandeur: Finercor, 03540 Alicante (ES); Quere, Jean-Luc, 33320 Eysines (FR); Brevets Associés S.à.r.l., 92300 Levallois-Perret (FR); Protain, Gérard, 92300 Levallois-Perret (FR); Protain, Florent, 92300 Levallois-Perret (FR); Protain, Michèle, 92300 Levallois-Perret (FR); Lebeau, Cécile, Ecully (FR); Surelle, André, 83530 Agay (FR)
(72) Inventeur: Quere, Jean-Luc, 33320 Eysines (FR)
(74) Mandataire: Nithardt, Roland

(57) **Abrégé**

L'invention concerne un procédé et un dispositif de régénération d'un gel absorbeur d'anhydride carbonique contenu dans un gaz, dans lequel l'on extrait l'anhydride carbonique du gel en le faisant précipiter sous la forme de sels d'un métal contenu sous la forme de cations dans un liquide de régénération agencé pour laver le gel. Le dispositif de régénération comporte essentiellement une unité de dissolution contenant un gel pour absorber l'anhydride carbonique contenu dans le gaz à traiter, une cuve de stockage de substances qui interagissent avec l'anhydride carbonique, et enfin une cuve de décantation des sels produits. Les deux cuves de stockage et de décantation ainsi que l'unité de dissolution sont couplées entre elles par des conduits qui véhiculent la solution aqueuse destinée à régénérer le gel.

## Description

### Domaine technique

La présente invention concerne un procédé de régénération d'un gel absorbeur d'anhydride carbonique contenu dans un gaz, procédé dans lequel on fait passer ledit gaz chargé en anhydride carbonique à travers ledit gel où il est absorbé.

L'invention concerne également un dispositif de régénération d'un gel absorbeur d'anhydride carbonique contenu dans un gaz, pour la mise en oeuvre de ce procédé.

### Technique antérieure

Une des préoccupations écologiques actuelles est la réduction de la production des gaz dits à effet de serre et en particulier de l'anhydride carbonique CO₂ qui est un gaz produit par la combustion et que l'on considère en grande partie comme responsable de l'augmentation de la température moyenne de l'atmosphère. Cette réduction peut s'effectuer de deux manières distinctes, à savoir, d'une part, réduire sa production et, d'autre part, éliminer ou fixer l'anhydride carbonique produit.

De nombreuses techniques ont été développées pour absorber l'anhydride carbonique produit par la combustion. On connaît par exemple le procédé de lavage aux amines ou le procédé de séparation par osmose inverse. Toutefois, ces techniques ne donnent pas satisfaction de manière absolue pour des raisons à la fois techniques et économiques.

La publication internationale WO 2006/111686 A3 décrit un gel absorbeur d'anhydride carbonique sous la forme d'un gel qui a la faculté d'absorber un volume important de ce gaz. La présente invention se propose de mettre à disposition une technologie de régénération de ce gel absorbeur d'anhydride carbonique en vue de permettre l'absorption en continu de cet anhydride carbonique et l'utilisation industrielle de ce procédé.

### Exposé de l'invention

La présente invention offre donc un procédé tel que défini en préambule et caractérisé en ce que l'on extrait l'anhydride carbonique du gel qui l'a absorbé en le faisant précipiter sous la forme de carbonates et/ou d'hydrogénocarbonates d'un métal contenu sous la forme de cations dans un liquide de régénération agencé pour laver ledit gel, ce liquide contenant une solution tampon pour maintenir le pH du liquide de régénération à une valeur prédéterminée.

De façon avantageuse, lesdits cations sont issus de substances choisies parmi le fer et le calcium.

Lorsque les cations proviennent de fer présent sous la forme de cations de fer Fe₂⁺ dans le liquide de régénération, ils sont obtenus par l'attaque de limaille par un acide, et l'on peut récupérer l'anhydride carbonique sous la forme de carbonates de fer FeCO₃ et/ou de hydrogénocarbonates de fer Fe(HCO₃)₂.

Lorsque les cations proviennent de calcium présent sous la forme d'hydroxyde de calcium Ca(OH)₂, l'on peut récupérer l'anhydride carbonique sous la forme de sels de calcium Ca(HCO₃)₂ et/ou de CaCO₃

Dans le cas de l'utilisation de fer, le pH du liquide de régénération est avantageusement acide et, lorsque l'on utilise du calcium, le pH du liquide de régénération est basique.

L'invention offre également un dispositif tel que défini en préambule et caractérisé en ce qu'il comprend des moyens agencés pour extraire l'anhydride carbonique du gel qui l'a absorbé en le faisant précipiter sous la forme de carbonates et/ou d'hydrogénocarbonates d'un métal contenu sous la forme de cations dans un liquide de régénération agencé pour laver ledit gel, et des moyens agencés pour alimenter ce liquide avec une solution tampon pour maintenir le pH dudit liquide à une valeur prédéterminée.

Dans la forme de réalisation préférée, le dispositif comprend une unité de dissolution contenant ledit gel, des moyens agencés pour faire traverser ledit gel par un gaz contenant de l'anhydride carbonique, et des moyens agencés pour rincer ledit gel au moyen dudit liquide de régénération.

Ledit dispositif comporte également une cuve de stockage de substances métalliques dont les cations interagissent avec l'anhydride carbonique, ladite cuve de stockage étant traversée par ledit liquide de régénération, ainsi qu'une cuve de décantation agencée pour recevoir des composés sous la forme de carbonates et/ou similaires des substances métalliques dont les cations sont contenus dans la cuve de stockage.

De façon avantageuse, lesdites substances métalliques peuvent comporter du fer sous la forme de cations Fe₂⁺ issus de limaille de fer attaquée par un acide, ou du calcium.

En présence de calcium, lesdites substances métalliques comportent de l'hydroxyde de calcium Ca(OH)₂.

Lorsque les substances métalliques sont à base de fer, la cuve de décantation est agencée pour recevoir des précipités de FeCO₃ et/ou de Fe(HCO₃)₂ et lorsque les substances métalliques sont à base de calcium, la cuve de décantation est agencée pour recevoir des précipités sous la forme de sels de calcium Ca(HCO₃)₂ et/ou de CaCO₃.

### Description sommaire des dessins

La présente invention et ses avantages seront mieux compris à la lecture de la description détaillée d'une mise en oeuvre préférée du dispositif de l'invention, en référence aux dessins annexés donnés à titre indicatif et non limitatif, dans lesquels:
la figure 1 est une vue schématique d'ensemble représentant un dispositif de régénération d'un gel d'adsorption d'anhydride carbonique selon l'invention, et
la figure 2 est une vue partielle de l'unité de séparation des gaz du dispositif de la figure 1.

### Manière(s) de réaliser l'invention

Le procédé de l'invention consiste principalement à régénérer une substance, appelée gel tel que défini dans la publication internationale antérieure WO 2006/111686 A3, qui agit comme un absorbeur d'anhydride carbonique (CO₂). Ce gel est régénéré par une solution aqueuse appelée liquide de régénération. Lorsque l'anhydride carbonique (CO₂) est absorbé par ledit gel, la réaction chimique qui a lieu s'écrit comme suit :

CO₂ + H₂O -gel-) H₂CO₃-)HCO₃ + H ⁺ (1)

Lorsque la solution aqueuse dans laquelle se produit la réaction a un pH acide, cette réaction est relativement lente et la production d'acide carbonique H₂CO₃ est faible, car il a tendance à se retransformer en CO₂ immédiatement après sa formation. L'action d'absorbeur du gel qui absorbe de grandes quantités d'anhydride carbonique permet la transformation de cet anhydride carbonique (CO₂) en carbonates. Il en résulte en théorie une forte concentration d'acide carbonique HCO₃⁻ + H ⁺, ce qui conduit à des phénomènes de précipitation sous la forme de carbonates de cations, par exemple de fer (Fe₂⁺) et de calcium (Ca₂⁺), contenus dans le liquide de régénération.

La régénération du gel absorbeur de l'anhydride carbonique s'appuie sur le contrôle de trois paramètres :
- un apport en eau pour compenser la consommation d'eau selon la réaction chimique (1) mentionnée ci-dessus,
- une élimination des ions H⁺ en vue de contrôler l'acidité de la solution aqueuse de régénération, et
- une élimination du groupement HCO₃⁻ en vue d'éviter une précipitation de carbonates de métaux au sein du gel absorbeur de CO₂.

Les deux principales technologies qui ont été étudiées pour régénérer le CO₂ sont basées sur la formulation du gel absorbeur d'anhydride carbonique et sur l'utilisation d'un liquide de régénération respectivement à base de cations de fer et à base de cations de calcium. Ces formulations sont données à titre d'exemples non limitatifs.

Dans la technologie à base de cations de fer, l'acide carbonique du liquide de régénération permet d'apporter des ions H+ qui réagissent sur du fer à l'état de limaille de fer qui est oxydée. Il se produit ainsi du dihydrogène H₂ et des ions Fe₂⁺. Les ions Fe₂⁺ se combinent aux carbonates et hydrogénocarbonates pour former des précipités de Fe(HCO₃)₂ ou de FeCO₃ selon la réaction (2) ci-dessous.

2H⁺ + Fe -----) Fe²⁺ + H₂ (2)

Cette technique nécessite un fonctionnement dans une solution aqueuse de pH acide. L'acidité de la solution est constamment entretenue par l'introduction d'anhydride carbonique absorbé par le gel.

L'avantage de cette technique est la production d'hydrogène en quantité importante sans production d'anhydride carbonique. De plus, l'anhydride carbonique devient un vecteur énergétique en assurant une production d'hydrogène sur site alors que cet anhydride carbonique constitue habituellement un déchet encombrant que l'on cherche à éliminer. Cette technologie représente de ce fait une solution économique a priori attrayante.

Toutefois il s'avère qu'elle nécessite de grandes quantités de fer. En revanche, elle produit dans les mêmes proportions des produits qui pourraient être utilisés pour régénérer le fer, en l'occurrence des carbonates de fer FeCO₃ et/ou des hydrogénocarbonates de fer Fe(HCO₃)₂.

Cette technologie nécessite une exploitation en continu, car des arrêts trop longs modifient les équilibres chimiques entre les espèces en présence, notamment le pH de la solution aqueuse, et diminuent l'efficacité du procédé.

Dans la technologie à base de calcium, qui est complémentaire de la technologie à base de fer, l'anhydride carbonique est stocké sous la forme de carbonate de calcium solide, qui peut être valorisé directement. D'un point de vue économique, cette deuxième technologie apparaît comme un complément nécessaire de la première technologie pour les industries sidérurgiques ou les cimenteries.

Cette technologie est similaire à la précédente, mais les compositions du gel et du liquide de régénération sont différentes. Ils contiennent entre autres espèces chimiques des ions calcium Ca ₂⁺.

L'acide carbonique présent dans la solution de régénération réagit avec l'hydroxyde de calcium présent dans un bac de traitement. En fonction du pH, il se forme des précipités de Ca(HCO₃)₂ ou de CaCO₃ (calcaire). L'acidité de l'acide carbonique est neutralisée par les ions OH- introduits avec l'hydroxyde de calcium. Contrairement à la technologie basée sur le fer, la technologie basée sur le calcium nécessite une solution aqueuse à pH basique. On notera que le système est stable même en cas d'arrêt du processus de régénération.

D'un point de vue économique, le coût de l'hydroxyde de calcium Ca(OH₂) pourrait s'équilibrer avec les revenus issus de la vente du carbonate de calcium CaCO₃, produit. Ce dernier peut être utilisé comme matière de charge en cimenterie ou dans les revêtements de sol.

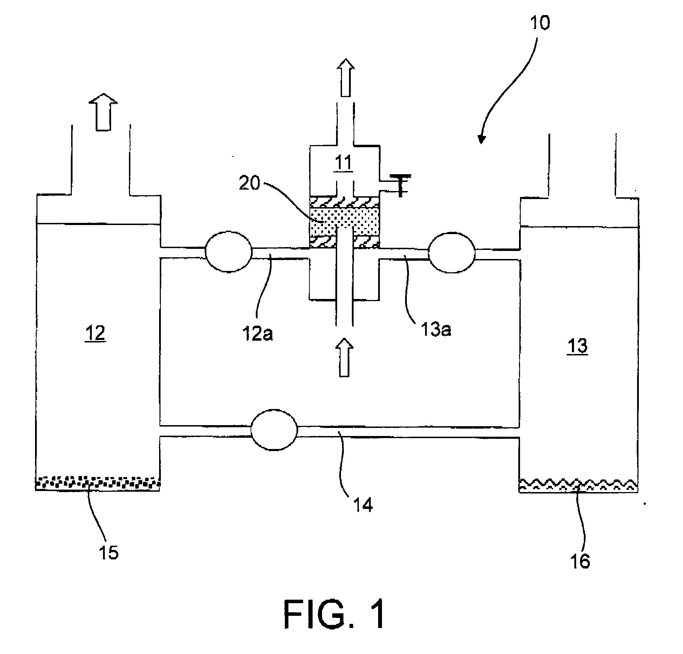

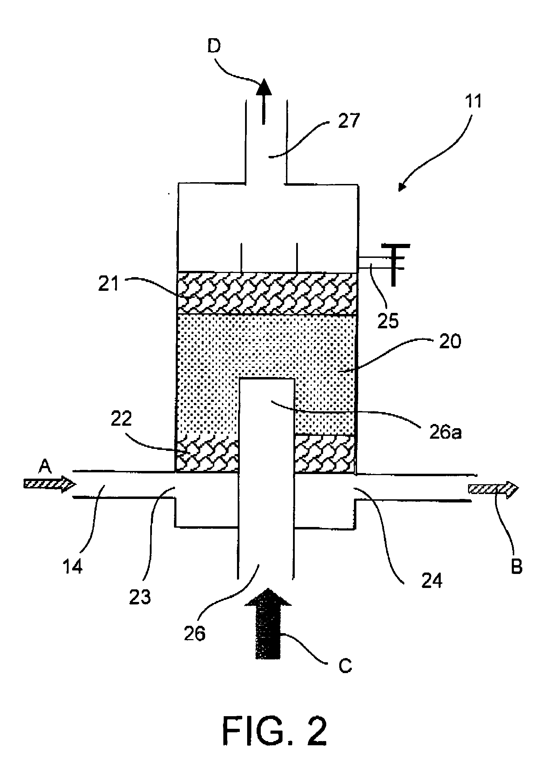

Le dispositif selon l'invention, qui est agencé pour mettre en oeuvre le procédé décrit ci-dessus selon deux technologies distinctes, mais pouvant être considérées comme complémentaires, est décrit ci-après en référence aux figures 1 et 2.

En référence à la figure 1, le dispositif de régénération 10 comporte essentiellement une unité de dissolution 11 agencée pour absorber de l'anhydride carbonique CO₂ contenu dans un gaz à traiter au moyen d'un gel 20. Il comprend en outre une cuve de stockage 12 des substances qui interagissent avec l'anhydride carbonique, notamment du fer ou du calcium et qui entrent dans le procédé de l'invention, ladite cuve étant reliée à l'unité de dissolution 11. Il comporte enfin une cuve de décantation 13 des sels, notamment des carbonates de calcium ou de fer produits au cours du procédé de l'invention. L'unité de dissolution 11, qui sera décrite plus en détail en référence à la figure 2, est reliée d'une part à la partie haute de la cuve de stockage 12 par un conduit 12a et d'autre part à la partie haute de la cuve de décantation 13 par un conduit 13a. Les deux cuves de stockage 12 et de décantation 13 sont également reliées entre elles par un conduit 14. La cuve de stockage 12 et la cuve de décantation 13 ainsi que l'unité de dissolution 11 sont couplées entre elles par les conduits 12a, 13a et 14 qui véhiculent une solution aqueuse destinée à régénérer le gel.

Dans sa partie inférieure, la cuve de stockage 12 contient par exemple de la limaille de fer 15 qui est attaquée par un acide pour produire des ions Fe₂⁺ constituant la source d'approvisionnement en fer pour alimenter la réaction produisant les sels FeCO₃ et/ou Fe(HCO₃)₂ 16. Dans le cadre de l'utilisation de calcium à la place du fer, la cuve de stockage 12 contient de l'hydroxyde de calcium Ca(OH)₂ pour alimenter la réaction qui produit des sels de calcium Ca(HCO₃)₂ ou de CaCO₃. Cette cuve de stockage 12 génère par ailleurs de l'hydrogène qui est évacué à la partie supérieure de la cuve de stockage 12 et qui peut servir à tous usages, en particulier être utilisé comme une source d'énergie. La cuve de décantation 13 est agencée pour assurer la décantation des sels qui sont produits au cours des réactions mentionnées précédemment.

La figure 2 représente plus en détail l'unité de dissolution 11 qui contient essentiellement le gel 20 constituant le principe actif et qui est retenu entre deux éléments de maintien, par exemple sous la forme de deux couches 21 et 22 de mousse poreuse. L'unité de dissolution 11 comporte deux ouvertures 23 et 24 ménagées dans sa partie inférieure localisée sous la couche de maintien inférieure 22 et qui sont reliées au conduit 14. L'ouverture 23, dite ouverture d'entrée, véhicule le liquide de régénération, schématiquement représenté par la flèche A, en provenance de la cuve de stockage 12, et l'ouverture 24, dite ouverture de sortie, véhicule le liquide de régénération, schématiquement représenté par la flèche B, en direction de la cuve de décantation 13. Dans sa partie supérieure, l'unité de dissolution 11 est équipée d'une tubulure d'évacuation 25 permettant d'assurer la vidange de cette unité.

A sa base, l'unité de dissolution 11 comporte une arrivée 26 des gaz à traiter, schématiquement représentés par la flèche C, et qui contiennent une proportion importante d'anhydride carbonique. On notera que l'arrivée 26 est prolongée, jusqu'à l'intérieur de la couche de gel 20, à travers la couche de maintien en mousse poreuse 22, par un conduit 26a. A son sommet, l'unité de dissolution 11 comporte une sortie 27 des gaz traités, schématiquement représentés par la flèche D, et qui sont débarrassés, dans une large proportion, de l'anhydride carbonique qu'ils contenaient à l'entrée.

L'invention n'est pas limitée à la forme de réalisation du dispositif telle que décrite. En outre le procédé peut être étendu à diverses variantes évidentes pour l'homme de l'art sans sortir du cadre de l'invention. Le procédé ainsi que le dispositif sont bien adaptés en vue de la résolution du problème technique posé.

## Revendications

1. Procédé de régénération d'un gel absorbeur d'anhydride carbonique (CO₂) contenu dans un gaz, procédé dans lequel on fait passer ledit gaz chargé d'anhydride carbonique (CO₂) à travers ledit gel absorbeur d'anhydride carbonique (CO₂), **caractérisé en ce que** l'on extrait l'anhydride carbonique (CO₂) du gel qui l'a absorbé en le faisant précipiter sous la forme de carbonates et/ou d'hydrogénocarbonates d'un métal contenu sous la forme de cations dans un liquide de régénération agencé pour laver ledit gel absorbeur d'anhydride carbonique (CO₂), ce liquide contenant une solution tampon pour maintenir le pH du liquide à une valeur prédéterminée.

2. Procédé selon la revendication 1, **caractérisé en ce que** lesdits cations sont issus de substances choisies parmi le fer et le calcium.

3. Procédé selon la revendication 2, dans lequel les cations sont des cations de fer Fe₂⁺ provenant de limaille de fer attaquée par un acide, **caractérisé en ce que** l'on récupère l'anhydride carbonique (CO₂) sous la forme de carbonates de fer FeCO₃ et/ou de hydrogénocarbonates de fer Fe(HCO₃)₂,

4. Procédé selon les revendications 1 et 2, dans lequel les cations proviennent de calcium présent sous la forme l'hydroxyde de calcium Ca(OH)₂, **caractérisé en ce que** l'on récupère l'anhydride carbonique (CO₂) sous la forme de sels de calcium Ca(HCO₃)₂ et/ou de CaCO₃

5. Procédé selon les revendications 1 et 3, **caractérisé en ce que** le pH du liquide de régénération est acide.

6. Procédé selon les revendications 1 et 4, **caractérisé en ce que** le pH du liquide de régénération est basique.

7. Dispositif de régénération (10) d'un gel absorbeur d'anhydride carbonique (CO₂) contenu dans un gaz selon le procédé dans lequel on fait passer ledit gaz chargé en anhydride carbonique à travers ledit gel absorbeur d'anhydride carbonique, **caractérisé en ce qu'**il comprend des moyens agencés pour extraire l'anhydride carbonique du gel (20) qui l'a absorbé en le faisant précipiter sous la forme de carbonates et/ou d'hydrogénocarbonates d'un métal contenu sous la forme de cations dans un liquide de régénération agencé pour laver ledit gel, et des moyens agencés pour alimenter ce liquide avec une solution tampon pour maintenir le pH du liquide à une valeur prédéterminée.

8. Dispositif selon la revendication 7, **caractérisé en ce qu'**il comprend une unité de dissolution (11) contenant ledit gel, des moyens agencés pour faire traverser ledit gel par un gaz contenant de l'anhydride carbonique, et des moyens agencés pour rincer ledit gel au moyen dudit liquide de régénération.

9. Dispositif selon les revendications 7 et 9, **caractérisé en ce qu'**il comporte une cuve de stockage (12) de cations issus de substances métalliques (15) qui interagissent avec l'anhydride carbonique, et traversée par ledit liquide de régénération.

10. Dispositif selon la revendication 7, **caractérisé en ce qu'**il comporte une cuve de décantation (13) agencée pour recevoir des composés (16) sous la forme de carbonates et/ou similaires des substances métalliques contenues dans ladite cuve de stockage (13).

11. Dispositif selon la revendication 9, **caractérisé en ce que** lesdites substances métalliques génèrent des cations de fer.

12. Dispositif selon la revendication 11, **caractérisé en ce que** lesdites substances métalliques qui génèrent des cations de fer Fe₂⁺ comportent de la limaille de fer (15) attaquée par un acide.

13. Dispositif selon la revendication 9, **caractérisé en ce que** lesdites substances métalliques comportent du calcium.

14. Dispositif selon la revendication 13, **caractérisé en ce que** lesdites substances métalliques comportent de l'hydroxyde de calcium Ca(OH)₂.

15. Dispositif selon la revendication 10, dans lequel les substances métalliques sont à base de fer, **caractérisé en ce que** la cuve de décantation (13) est agencée pour recevoir des précipités de FeCO₃ et/ou de Fe(HCO₃)₂.

16. Dispositif selon la revendication 10, dans lequel les substances métalliques sont à base de calcium, **caractérisé que** la cuve de décantation (13) est agencée pour recevoir des précipités sous la forme de sels de calcium Ca(HCO₃)₂ et/ou de CaCO₃.
